# EUROPÄISCHE PATENTSCHRIFT

(11) **EP 0 485 698 B1**
(45) Veröffentlichungstag und Bekanntmachung des Hinweises auf die Patenterteilung: **09.07.1997**
(21) Anmeldenummer: 91114216.4
(22) Anmeldetag: 24.08.1991
(51) Int. Cl.: A01D 78/12, A01D 78/10

(54) **Heuwerbungsmaschine**
Hay making machine
Machine de fenaison

(30) Priorität: 18.10.1990 DE 9014438 U
(43) Veröffentlichungstag der Anmeldung: 20.05.1992
(73) Patentinhaber: H. Niemeyer Söhne GmbH & Co. KG, D-48466 Hörstel (DE)
(72) Erfinder: Kosel, Hans Dieter, W-4530 Ibbenbüren (DE); Eder, Wolfgang, W-3340 Wolfenbüttel (DE)

(56) Entgegenhaltungen:
- EP-A- 0 130 617
- EP-A- 0 316 896
- DE-A- 2 828 282
- DE-A- 3 000 820
- DE-A- 3 418 352
- DE-A- 3 543 729
- DE-A- 3 628 604
- FR-A- 1 352 702
- FR-A- 2 010 323
- FR-A- 2 346 958
- FR-A- 2 435 895
- GB-A- 1 191 487

## Beschreibung

Die Erfindung bezieht sich auf eine Heuwerbungsmaschine gemäß dem Oberbegriff des Anspruchs 1.

Bei einer bekannten Maschine dieser Art (DE-A-30 00 820) sind die Zinkenträger über Kurbelarme in einer Steuerkurve geführt, deren Führungsflächen einander gegenüberliegen und einen zur Drehachse des Kreiselrechens der Heuwerbungsmaschine koaxialen Führungsspalt begrenzen, den an den Kurbelarmen gelagerte Rollen durchlaufen. Derartig ausgebildete Steuerkurven sind geometrisch nicht optimal ausgelegt. Dies führt dazu, daß im Kurvenbereich, in dem die Zinkenarme umgesteuert werden, von den Rollen mehr oder weniger große Axialkräfte übertragen werden müssen. Die Lebensdauer der Rollen kann dadurch beeinflußt werden.

Der Erfindung liegt die Aufgabe zugrunde, eine Heuwerbungsmaschine der im Oberbegriff des Anspruchs 1 angegebenen Art zu schaffen, die bei großer baulicher Einfachheit die Steuerung der Zinkenträger und damit die Arbeitsqualität der Kreiselrechen verbessert sowie die Lebensdauer der Maschine erhöht.

Die Erfindung löst diese Aufgabe durch eine Heuwerbungsmaschine mit den Merkmalen des Anspruchs 1. Hinsichtlich wesentlicher, weiterer Ausgestaltungen wird auf die Ansprüche 2 bis 13 verwiesen.

Die erfindungsgemäße Steuerkurve, in der die Laufrollen für die Kurbelarme geführt werden, ist geometrisch optimiert, indem die Erzeugenden der Laufflächen der Rollen und die Erzeugende einer gedachten Mittelfläche zwischen den Führungsflächen einen gemeinsamen Schnittpunkt auf der Drehachse des Kreiselrechens haben. Dadurch wird die Lebensdauer der Rollen wesentlich erhöht und der Kurvenverlauf kann ohne nachteilige Folgen den Erfordernissen den an den Zinkenarmen befestigten Zinken optimal angepaßt werden.

In dem gemeinsamen Schnittpunkt, der vorzugsweise in der Mitte des vertikalen Stellbereiches der Steuerkurve liegt, treffen sich neben der gedachten Mittelfläche auch die Mittelachsen der Rollen, die an gekröpften Kurbelarmen befestigt sind und die Mittelachsen der radial ausgerichteten Innenteile der Zinkenträger, so daß dieser gemeinsame Schnittpunkt einem Mittelpunkt einer Kugel gleicht, auf den hin sich alle beteiligten Achsen ausrichten.

Eine vorteilhafte Ausführungsform der Erfindung ist eine Ausbildung der Führungsflächen der Steuerkurve, wenn diese parallel zur gedachten Mittelfläche ausgerichtet sind. Hierdurch wird insbesondere die Herstellung vereinfacht, und zwar besonders dann, wenn die Führungsflächen beispielsweise nicht spanabhebend sondern durch Pressen oder Gießen hergestellt werden.

Die Rollen sind in vorteilhafter Weise mit balligen Laufflächen versehen, damit Fertigungstoleranzen ausgeglichen und dadurch die Herstellung vereinfacht wird.

Bei der Heuwerbungsmaschine nach der Erfindung weisen die einzelnen Kreiselrechen eine unterschiedliche Anzahl von Zinkenträger auf. Hierdurch wird der jeweiligen Schwadgröße Rechnung getragen, was insbesondere an den Übergabestellen zu einer problemlosen und schonenden Übergabe des Schwades führt. Hierbei hat vorzugsweise der in Fahrtrichtung erste Kreiselrechen am wenigsten Zinken und der letzte die meisten.

An den Übergabestellen überlappen sich die Zinkenkreisel, wobei in vorteilhafter Weise nach der Erfindung die abgekröpften Zinkenarme des vorlaufenden Kreisels über den jeweiligen Zinkenträger des nachgeordneten Kreiselrechens so gesteuert wird, daß er über ihn hinweggehoben wird und diesen nicht behindert. Dies wird durch die erfindungsgemäß geometrisch optimierte Steuerkurve erleichtert, da auch steilere Kurvenbahnen sich nicht nachteilig auswirken.

Zum Straßentransport werden die äußeren Kreiselrechen vorzugsweise um etwa fahrtrichtungsparallele Achsen in eine mindestens senkrechte Lage geklappt und verriegelt. Der sich unter dem Maschinengestell befindende Kreiselrechen kann beispielsweise hydraulisch gegenüber diesem in eine Transportstellung angehoben werden. Dadurch erhält dieser Kreiselrechen eine ausreichende Transporthöhe. Die Laufräder am Maschinengestell sind durch eine Lenkvorrichtung steuerbar, die automatisch wirkt und bei Kurvenfahrt einen optimalen Nachlauf der Heuwerbungsmaschine sicherstellt.

Weitere Vorteile der Erfindung ergeben sich aus der nachfolgenden Beschreibung und den Zeichnungen, in denen ein Ausführungsbeispiel nach der Erfindung schematisch, angenähert maßstäblich dargestellt ist. Es zeigt:
- Fig. 1 -: Einen Schwader mit drei Kreiselrechen, vereinfacht dargestellt, in Arbeitsstellung, in einer Seitenansicht.
- Fig. 2 -: Eine Draufsicht des Schwaders.
- Fig. 3 -: Eine Ansicht des Schwaders in Fahrtrichtung, in Arbeitsstellung, in vereinfachter Darstellung.
- Fig. 4 -: Eine Ansicht des Schwaders in Fahrtrichtung, in Transportstellung, in vereinfachter Darstellung.
- Fig. 5 -: Eine vereinfachte Draufsicht der Steuerkurve mit den zugeordneten Zinkenträgern.
- Fig. 6 -: Einen Schnitt A-A gemäß Fig. 5.
- Fig. 7 -: Einen Schnitt A-A gemäß Fig. 5 mit einer Ausführungsvariante.

Der als Ausführungsbeispiel in den Zeichnungen dargestellte Schwader ist vorzugsweise über bildlich vernachlässigte Unterlenker eines Dreipunktgestänges mit einem ebenfalls nicht dargestellten Traktor verbunden und wird von diesem in Fahrtrichtung (F) gezogen. Die Kreiselrechen (16,17,18) werden in Arbeitsstellung über die Traktorzapfwelle, Gelenkwellen und Getriebe angetrieben. Der Schwader besteht im wesentlichen aus einem Maschinengestell (1), das an seinem hinteren Ende vorzugsweise zwei Laufräder (3) aufweist, die über eine Lenkvorrichtung (28) automatisch von der jeweiligen Kurvenfahrt des Traktors abhängig gesteuert werden, und drei Kreiselrechen (16,17,18), deren Verbindungsachse (30) zur Fahrtrichtung einen spitzen Winkel (β) einschließt. Je nach gewünschter Arbeitsbreite des Schwaders können auch mehrere oder weniger Kreiselrechen dem Maschinengestell (1) zugeordnet werden.

Der Schwader kann auch als Dreipunktgerät und/oder ohne Laufräder (3) ausgerüstet werden. Die einzelnen Kreiselrechen (16,17,18) sind in Arbeitsstellung begrenzt höhenbeweglich und stützen sich über Laufräder (29) auf dem Boden ab, damit sich die Arbeitswerkzeuge den Bodenunebenheiten optimal anpassen können.

Die Kreiselrechen (16,17,18) weisen eine unterschiedliche Anzahl abgekröpfter Zinkenträger (4) auf, an denen jeweils Zinken (2) als Arbeitswerkzeuge befestigt sind. Ein in Fahrtrichtung (F) erster Kreiselrechen (16) hat die wenigsten Zinkenträger, deren Anzahl bis zu einem letzten Kreiselrechen (18) zunimmt. Ferner sind die Kreiselrechen (16,17,18) überlappend angeordnet. Die Zinkenträger (4) der jeweils vorauslaufenden Kreiselrechen (16,17) werden im Bereich der Überlappung über die dem nachfolgenden Kreiselrechen (17,18) zugeordneten Zinkenträger (4) hinweggehoben. Dies wird durch eine entsprechende Auslegung der jeweiligen Steuerkurve (21,22) erreicht.

Durch die Überlappung und die unterschiedliche Anzahl der wirksamen Zinkenarme (4) der Kreiselrechen (16,17,18) wird entsprechend dem Kreiselrechendurchmesser einmal eine relativ schmale Maschine erreicht und zum anderen der Übergabepunkt des Halmgutes zum nächsten Kreiselrechen möglichst weit in Fahrrichtung nach vorn verlegt. Dies kommt der schonenden Behandlung des Halmgutes und der Anpassung an die der Arbeitsbreite entsprechende, zunehmende Schwadgröße zugute.

Je nach Einsatzbereich kann der Schwader auch so ausgestaltet sein, daß die äußeren Kreiselrechen (16,18) bei der Arbeit soweit auseinandergezogen und verriegelt werden können, daß Kleinschwaden mit der Arbeitsbreite entsprechend den Kreiselrechendurchmessern und deren Achsabstand gebildet werden.

Es ist auch möglich, den Schwader, ohne die äußeren Kreiselrechen (16,18) hochzuklappen, für den Transport in die Längsachse hinter den Traktor zu schwenken und zu arretieren. Wegen des relativ kurzen Schwerpunktabstandes zur Koppelebene wirken sich hier die sich überlappenden Kreiselrechen besonders günstig aus.

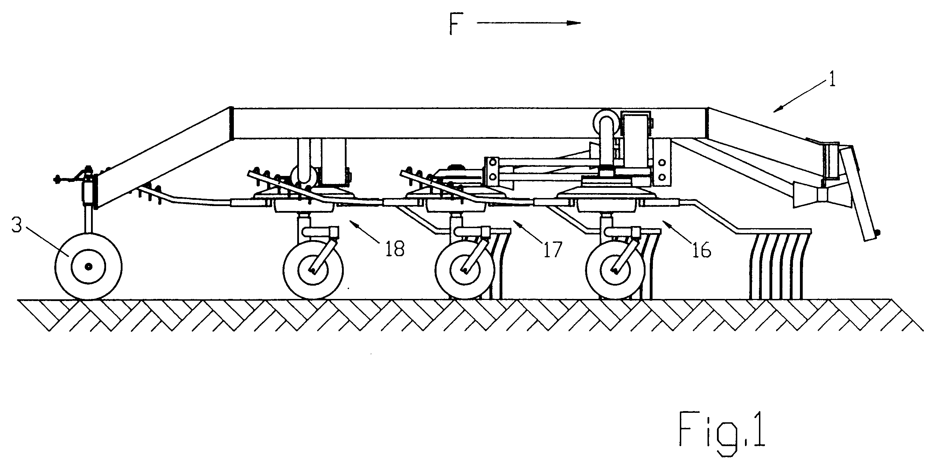

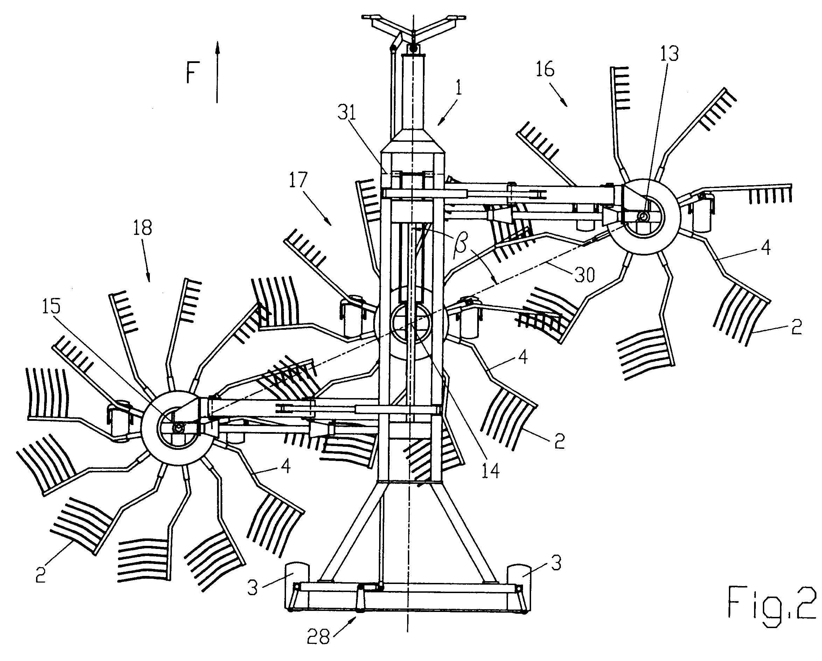

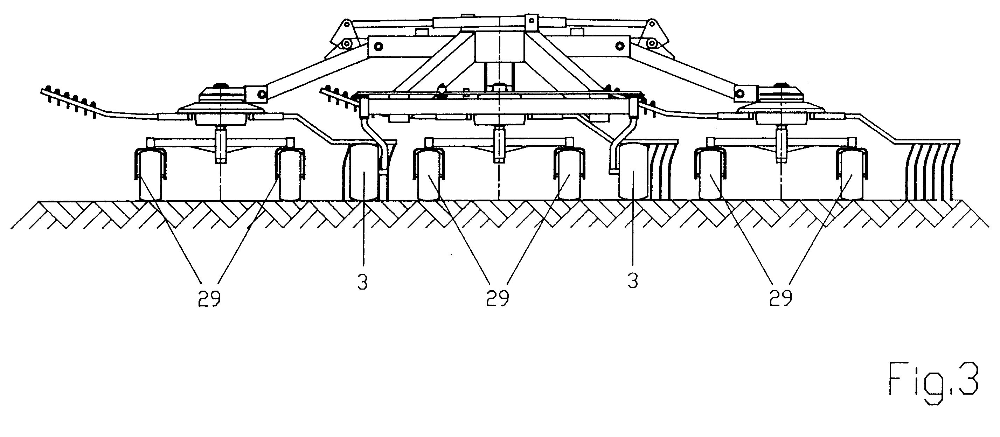

Die Fig. 1,2 und 3 zeigen den Schwader jeweils in Arbeitsstellung.

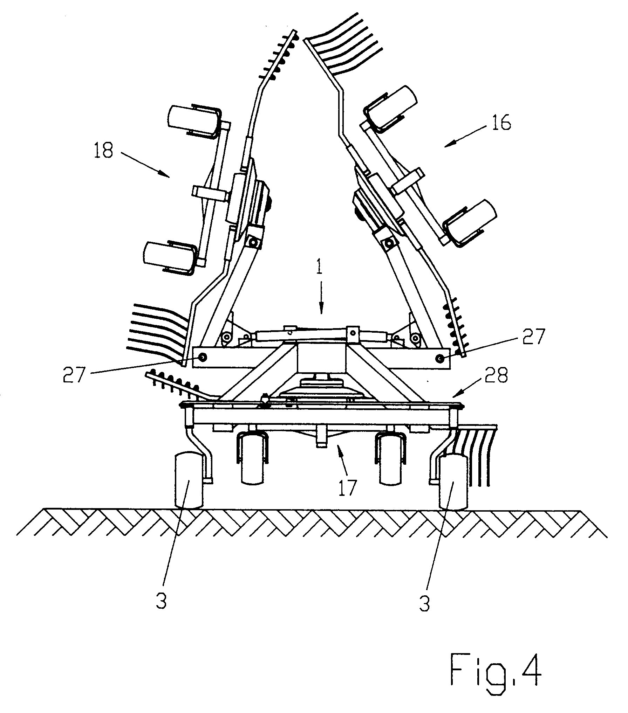

In der Transportstellung (Fig. 4) werden die äußeren Kreiselrechen (16,18) jeweils etwa um mindestens 90° über fahrtrichtungsparallele Achsen (27) geschwenkt und verriegelt. Der mittlere Kreiselrechen (17) wird nach dem Ausführungsbeispiel um eine Querachse (31) beispielsweise hydraulisch unter das Maschinengestell (1) geschwenkt, so daß der Schwader als aufgesatteltes Gerät mit über die Lenkvorrichtung (28) automatisch gesteuerten Laufräder (3) im Transport gefahren werden kann.

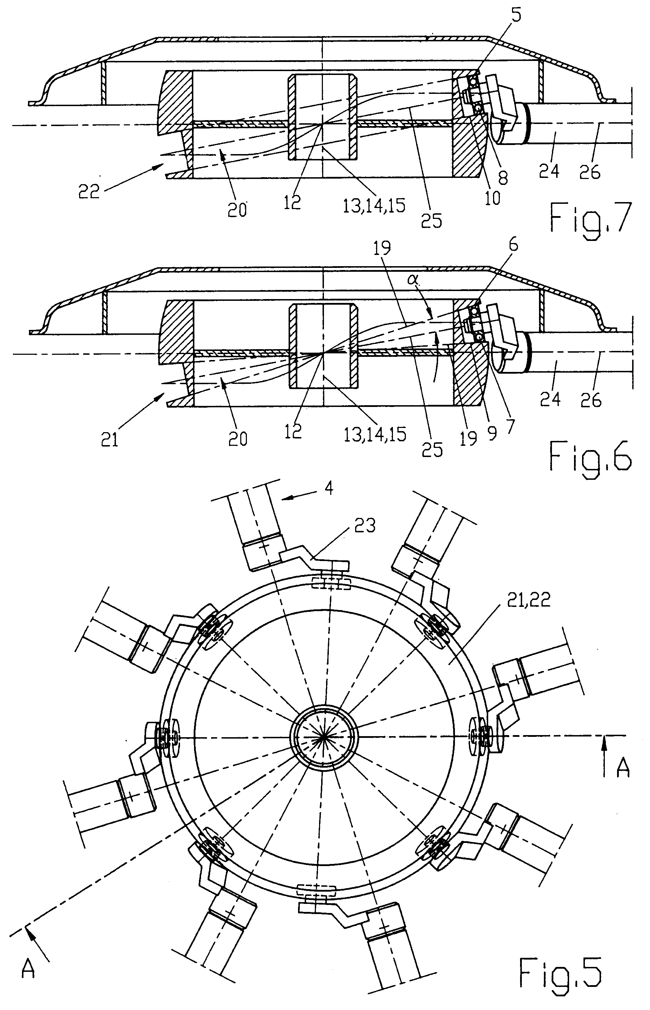

In Figur 5 ist die Steuerkurve (21,22), die jedem Kreiselrechen (16,17,18) zugeordnet ist, schematisch dargestellt. Die Steuerkurve ist in bekannter Weise radial ein- und feststellbar, damit die Kurvenstellung und damit die Stellung der Zinkenträger (4) und der Zinken (2) den Erfordernissen angepaßt werden kann.

In der Steuerkurve (21,22) werden die Rollen (7,8) vertikal geführt. Sie sind über gekröpfte Kurbelarme (23) mit dem drehbaren Zinkenträger (4) verbunden, an dessen anderem Ende die Zinken (2) befestigt sind. Die Steuerkurve (21,22) steuert also durch ihre Auslegung das Arbeitswerkzeug Zinken(2).

Die Mittelachsen (25,26) der Rollen (7,8) und des Innenteils (24) treffen sich jeweils in einem gemeinsamen Schnittpunkt (12) auf den jeweiligen vertikalen Drehachsen (13,14,15) der einzelnen Kreiselrechen (16,17,18). Wie aus Fig. 6 und Fig. 7 zu sehen ist, liegt der Schnittpunkt (12) vorzugsweise in der Mitte des vertikalen Stellbereiches der Steuerkurven (21,22).

Fig. 6 veranschaulicht schematisch eine Ausführung mit konischen Laufflächen (6) der Rollen (7). Die ebenfalls konischen Führungsflächen (9) der Steuerkurve (21) weisen mit ihren Erzeugenden (19) auf den gemeinsamen Schnittpunkt (12).

Die gedachte Mittelfläche (20) entspricht der Mittelebene der Steuerkurve (21), ist der Kurvenform angepaßt und schneidet den Schnittpunkt (12) in der jeweiligen Drehachse (13,14,15). Die Mittelachse (25) der Rolle (7) und eine Erzeugende (19) schließt einen spitzen Winkel (α) ein.

Zwischen der konischen Lauffläche (6) der Rolle (7) und der konischen Führungsfläche (9) ist ausreichendes Spiel vorgesehen, wobei die am Außendurchmesser konische Rolle (7) vorzugsweise ballig ausgeführt wird, damit beispielsweise Fertigungstoleranzen aufgenommen werden können.

In Fig. 7 ist eine Variante des Ausführungsbeispiels schematisch dargestellt. Die Lauffläche (5) der Rolle (8) sowie die korrespondierende Führungsfläche (10) der Steuerkurve (22) ist zylindrisch ausgeführt. Diese Flächen sind jeweils parallel zur Mittelachse (25) der Rolle (8) ausgerichtet, die den Schnittpunkt (12) schneidet. Die gedachte Mittelfläche (20) entspricht auch hier der Mittelebene der Steuerkurve (22).

Zur besseren Veranschaulichung kann als Vergleich ein zylindrischer Fräser herangezogen werden, dessen Mittelachse auf den Schnittpunkt (12) ausgerichtet ist und die jeweilige Kurvenform der Steuerkurve (22) einfräst. Die Mittelachse (25) ist während des gesamten Fräsvorganges der koaxial zur jeweiligen Drehachse (13,14,15) ausgerichteten Steuerkurve (22) zum Schnittpunkt (12) hin ausgerichtet.

Zum Ausgleich von Fertigungstoleranzen ist hier ebenfalls Spiel zwischen der vorzugsweise balligen Lauffläche (5) der Rolle (8) und der Führungsfläche (10) vorgesehen.

Eine derartig zylindrisch ausgeführte Führungsfläche (10) vereinfacht beispielsweise die Fertigung von gepreßten oder gegossenen Ausführungformen.

Die in den Ausführungsbeispielen aufgezeigte, vorteilhafte Ausbildung der Steuerkurven (21,22) ist nicht auf die dargestellten Ausführungsformen beschränkt, sondern kann überall dort angewendet werden, wo bei Heuwerbungs- oder anderen Maschinen die dadurch erreichte, vorteilhafte Arbeit der Werkzeuge von Vorteil ist.

## Patentansprüche

1. Heuwerbungsmaschine zum Schwaden von Halmgut mit mindestens einem um eine aufrechte Drehachse umlaufend angetriebenen Kreiselrechen (16,17,18), der über ein Maschinengestell (1) mit dem Traktor verbunden ist, wobei sich das Maschinengestell (1) über Laufräder (3) auf dem Boden abstützt und bei dem die Zinkenträger (4) über Kurbelarme (23) in einer Steuerkurve (21,22) geführt sind, deren Führungsflächen (10) einander gegenüberliegen und einen zur Drehachse (13,14,15) des Kreiselrechens (16,17,18) koaxialen Führungsspalt begrenzen, den an Kurbelarmen (23) gelagerte Rollen durchlaufen, dadurch gekennzeichnet, daß alle Mittelachsen (25) der Laufrollen (7,8), die zwischen der Steuerkurve (21,22) eine gedachte Mittelfläche (20) erzeugen, sich in jeder Stellung in der Steuerkurve (21,22) in einem gemeinsamen Schnittpunkt (12) auf der Drehachse (13,14,15) des Kreiselrechens (16,17,18) treffen.

2. Heuwerbungsmaschine nach Anspruch 1, dadurch gekennzeichnet, daß die Führungsflächen (10) der Steuerkurve (22) parallel zur gedachten Mittelfläche (20) ausgerichtet sind.

3. Heuwerbungsmaschine nach Anspruch 1, dadurch gekennzeichnet, daß die Führungsflächen (9) der Steuerkurve (21) zur gedachten Mittelfläche (20) unter einem sich radial nach außen hin öffnenden kleinen, spitzen Winkel (α) verlaufen.

4. Heuwerbungsmaschine nach Anspruch 3, dadurch gekennzeichnet, daß die Erzeugenden (19) der Führungsflächen (9) der Steuerkurve (21) sich in einem gemeinsamen Schnittpunkt (12) auf der Drehachse (13,14,15) des Kreiselrechens (16,17,18) treffen.

5. Heuwerbungsmaschine nach einem der Ansprüche 1 bis 4, dadurch gekennzeichnet, daß der gemeinsame Schnittpunkt (12) in der Mitte des vertikalen Stellbereichs der Steuerkurve (21,22) liegt.

6. Heuwerbungsmaschine nach einem der Ansprüche 1 bis 5, dadurch gekennzeichnet, daß die Zinkenträger (4) abgekröpfte Kurbelarme (23) und radial ausgerichtete Innenteile (24) aufweisen, deren Mittelachsen (25,26) den gemeinsamen Schnittpunkt (12) auf der Drehachse (13,14,15) des Kreiselrechens (16,17,18) ebenfalls treffen.

7. Heuwerbungmsmaschine nach einem der Ansprüche 1 bis 6, dadurch gekennzeichnet, daß die Rollen (7,8) eine ballige Lauffläche aufweisen.

8. Heuwerbungmaschine nach einem der Ansprüche 1 bis 7, mit mehreren einander benachbarten Kreiselrechen (16,17,18), deren Drehachsen (13,14,15) in einer gemeinsamen, gedachten Ebene verlaufen, die mit der Fahrtrichtungsebene (F) einen von 90° abweichenden Winkel einschließt, dadurch gekennzeichnet, daß jeder Kreiselrechen (16,17,18) eine unterschiedliche Anzahl von Zinkenträgern (4) aufweist.

9. Heuwerbungsmaschine nach Anspruch 8, dadurch gekennzeichnet, daß die Anzahl der Zinkenträger (4) pro Kreiselrechen (16,17,18) in Fahrtrichtung (F) vom ersten (16) zum letzten Kreiselrechen (18) zunimmt.

10. Heuwerbungsmaschine nach einem der Ansprüche 8 oder 9, dadurch gekennzeichnet, daß die äußeren Kreiselrechen (16,18) um etwa fahrtrichtungsparallele Achsen (27) in eine mindestens senkrechte Lage hochklappbar und verriegelbar sind.

11. Heuwerbungsmaschine nach einem der Ansprüche 8 bis 10, dadurch gekennzeichnet, daß der unter dem Maschinengestell (1) befindliche Kreiselrechen (17) gegenüber diesem in eine Transportstellung anhebbar ist.

12. Heuwerbungsmaschine nach Anspruch 11, dadurch gekennzeichnet, daß die Laufräder (3) durch eine Lenkvorrichtung (28) lenkbar sind.

13. Heuwerbungsmaschine nach einem der Ansprüche 8 bis 12, dadurch gekennzeichnet, daß die Zinkenträger (4) benachbarter Kreiselrechen (16,17,18) einander überlappende Arbeitsbereiche aufweisen.

## Claims

1. Hay-making machine for tedding of stalks with at least one rotary rake (16,17,18) driven about a vertical rotary axis, linked to the tractor via a machine frame (1), the machine frame (1) being supported on the ground by running wheels (3) and having tine-holders (4) carried via crank arms (23) in a radial cam (22), whose guide surfaces (10) lie opposite one another and define the limit of a gap which is coaxial to the rotary axis (13,14,15) of the rotary rake (16,17,18) and pass through the rollers mounted on the crank arms (23), characterised by the fact that all centre axes (25) of the rollers (7,8) which generate a notional central area (20) between the radial cam (21,22), meet with the radial cam (21,22) in any position, in a common intersection point (12) on the rotary axis (13,14,15) of the rotary rake (16,17,18).

2. Hay-making machine according to Claim 1, characterised by the fact that the guide surfaces (10) of the radial cam (22) are arranged parallel to the notional central area (20).

3. Hay-making machine according to Claim 1, characterised by the fact that the guide surfaces (9) of the radial cam (21) run at a small, radial, outward-facing, acute angel (α) to the notional central area (20).

4. Hay-making machine according to Claim 3, characterised by the fact that the generators (19) of the guide surfaces (9) of the radial cam (21) meet in a common intersection point (12) on the rotary axis (13,14,15) of the rotary rake (16,17,18).

5. Hay-making machine according to one of Claims 1 to 4, characterised by the fact that the common intersection point (12) lies in the centre of the vertical operating range of the radial cam (21,22).

6. Hay-making machine according to one of Claims 1 to 5, characterised by the fact that the tine-holders (4) have right-angled crank arms (23) and radially aligned inner parts (24) whose centre axes (25,26) likewise meet in the common intersection point (12) on the rotary axis (13,14,15) of the rotary rake (16,17,18).

7. Hay-making machine according to one of Claims 1 to 6, characterised by the fact that the rollers (7,8) have a convex running surface.

8. Hay-making machine according to one of Claims 1 to 7, with several rotary rakes (16,17,18) lying adjacent to one another, whose rotary axes (13,14,15) lie in a common, notional plane, which describes a 90° angle to the plane of the direction of motion (F), characterised by the fact that each rotary rake (16,17,18) has a different number of fine-holders (4).

9. Hay-making machine according to Claim 8, characterised by the fact that the number of tine-holders (4) per rotary rake (16,17,18) increases in the direction of motion (F) from the first (16) to the last rotary rake (18).

10. Hay-making machine to Claim 8 or 9, characterised by the fact that the outer rotary rakes (16,18) can be folded up about axes (27) roughly parallel to the direction of motion and locked in a vertical position.

11. Hay-making machine according to one of Claims 8 to 10, characterised by the fact that the rotary rake (17) located under the machine frame (1) can be raised towards the machine frame into a transport position.

12. Hay-making machine according to Claim 11, characterised by the fact that the running wheels (3) can be steered by a steering mechanism (28).

13. Hay-making machine according to one of Claim 8 to 12, characterised by the fact that the tine-holders (4) of adjacent rotary rakes (16,17,18) have overlapping working radii.

## Revendications

1. Andaineuse pour former des andains de fourrage, comprenant au moins un rotor à râteaux (16,17,18) entraîné en rotation autour d'un axe debout, ce rotor étant relié par un châssis (1) au tracteur, dont le châssis (1) de la machine s'appuie sur le sol par des roues de sustentation (3) et les supports de dents (4) sont guidés dans une courbe de commande (22) par des bras de manivelle (23), les surfaces de guidage (10) de cette courbe étant opposées et délimitant un intervalle de guidage coaxial à l'axe de rotation (13,14,15) du rotor à râteaux (16,17,18), intervalle de guidage parcouru par des galets portés par les bras de manivelle (23), caractérisée en ce que tous les axes médians (25) des galets (7,8), qui génèrent une surface médiane (20) imaginaire entre les courbes de commande (21,22), se rencontrent en chaque position de la courbe de commande (21,22) en un point d'intersection (12) commun sur l'axe de rotation (13,14,15) du rotor à râteaux (16,17,18).

2. Andaineuse selon la revendication 1, caractérisée en ce que les surfaces de guidage (10) de la courbe de commande (22) sont parallèles à la surface médiane imaginaire (20).

3. Andaineuse selon la revendication 1, caractérisée en ce que les surfaces de guidage (9) de la courbe de commande (21) font, par rapport à la surface médiane imaginaire (20), un angle aigu (α), petit, s'ouvrant radialement vers l'extérieur.

4. Andaineuse selon la revendication 3, caractérisée en ce que les génératrices (19) des surfaces de guidage (9) de la surface de commande (21) se rencontrent en un point d'intersection (12) commun sur l'axe de rotation (13,14,15) du rotor à râteaux (16,17,18).

5. Andaineuse selon l'une des revendications 1 à 4, caractérisée en ce que le point d'intersection commun (12) se situe au milieu de la plage de réglage verticale de la courbe de commande (21,22).

6. Andaineuse selon l'une des revendications 1 à 5, caractérisée en ce que les portes dents (4) comportent des bras de manivelle (23), recourbés et des parties intérieure (24) dirigées radialement et dont les axes (25,26) rencontrent également le point d'intersection commun (12) sur l'axe de rotation (13,14,15) du rotor à râteaux (16,17,18).

7. Andaineuse selon l'une des revendications 1 à 6, caractérisée en ce que les galets (7,8) ont une surface de roulement bombée.

8. Andaineuse selon l'une des revendications 1 à 7, comportant plusieurs rotors à râteaux (16,17,18) juxtaposés et dont les axes de rotation (13,14,15) sont situés dans un même plan imaginaire commun, faisant avec la direction de déplacement F un angle différent de 90°, caractérisée en ce que chaque rotor à râteaux (16,17,18) comporte un nombre différent de supports de dents (4).

9. Andaineuse selon la revendication 8, caractérisée en ce que le nombre de porte dents (4) par rotor à râteaux (16,17,18) augmente dans le sens de déplacement F entre le premier rotor à râteaux (16) et le dernier rotor à râteaux (18).

10. Andaineuse selon l'une des revendications 8 ou 9, caractérisée en ce que les rotors à râteaux extérieurs (16,18) peuvent basculer autour d'axes (27) sensiblement parallèle à la direction de déplacement, pour être relevés dans une position au moins sensiblement verticale et y être verrouillés.

11. Andaineuse selon l'une des revendications 8 à 10, caractérisée en ce que le rotor à râteaux (17) qui se trouve sous le châssis (1) peut être relevé par rapport à celui-ci dans une position de transport.

12. Andaineuse selon la revendication 11, caractérisée en ce que les roues de roulement (3) sont guidées par un dispositif de direction (28).

13. Andaineuse selon l'une des revendications 8 à 12, caractérisée en ce que les portes dents (4) du rotor à râteaux (16,17,18) voisin ont des plages de travail qui se chevauchent.
